# EUROPEAN PATENT APPLICATION

(11) **EP 2 949 974 A1**
(43) Date of publication of application: **02.12.2015**
(21) Application number: 15169693.7
(22) Date of filing: 28.05.2015
(51) Int. Cl.: F16K 1/226

(54) **BUTTERFLY VALVE**

(30) Priority: 29.05.2014 EP 14382199
(71) Applicant: BORGWARNER EMISSIONS SYSTEMS SPAIN, S.L.U., 36315 Vigo - Pontevedra (ES)
(72) Inventor: Hermida Domínguez, Xoan Xosé, E-36380 Gondomar - Pontevedra (ES); Calle Facal, Telmo, E-36001 Pontevedra - Galicia (ES)
(74) Representative: ABG Patentes, S.L.

(57) **Abstract**

The present invention is a butterfly valve (1) that has been modified such that it reduces internal losses in the closed position. The modifications according to the invention reduce losses occurring mainly through the shaft of the flap of the butterfly valve (1). The invention is of special interest in the use of butterfly valves in internal combustion engines for managing exhaust gases for their introduction into the intake by means of an EGR (Exhaust Gas Recirculation) system.

## Description

### Object of the Invention

The present invention is a butterfly valve modified such that it reduces internal losses in its closed position.

The modifications according to the invention reduce fluid losses occurring mainly through the shaft of the flap of the butterfly valve.

The invention is of special interest in the use of butterfly valves in internal combustion engines for managing exhaust gases for their introduction into the intake by means of an EGR (Exhaust Gas Recirculation) system.

### Background of the Invention

Internal combustion engines, primarily those intended for vehicles, incorporate an EGR system for reducing nitrogen oxide emissions. The EGR system takes part of the exhaust gas lacking oxygen and reintroduces it into the intake. Reintroducing exhaust gas into the intake reduces the percentage of oxygen entering the combustion chamber of the engine and, as a result, reduces the percentage of nitrogen oxides emitted after combustion.

The reintroduction of exhaust gases requires said gas to be previously treated. This gas is cooled by means of one or more heat exchangers and passed through filters preventing the passage of particles that may damage elements arranged downstream. Turbines of the compressor-turbine groups are one of the elements which are most sensitive to particles.

The use of compressor-turbine groups to increase the amount of air in the internal combustion engine increases the engine output. The EGR system is said to be a low or high pressure EGR system, respectively, depending on whether the recirculated gas is reintroduced before or after the compressor.

When the EGR system is a high pressure EGR system, the recirculated gas which is introduced in the engine infeed is managed with a valve, usually the so-called poppet-type valve. These valves close very well even with very high pressure differences on both sides of the valve. Nevertheless, a drawback of these valves is their high load losses, because the conduit passing through said valve has a complex geometric configuration. Such valves are said to be "rather impermeable" in the state of the art.

When the EGR system is a low pressure EGR system, the recirculated gas is introduced into the engine infeed at low pressure, and the use of poppet-type valves is not required. Butterfly valves that allow using conduits with no changes in section are normally used, preventing significant flow diversions that give rise to considerable load losses. Such valves are said to be "highly permeable" in the state of the art.

Although such valves do not have a closing capability equal to that of poppet valves, when the pressure difference between the inlet and outlet is not high, the use thereof in low pressure systems has been satisfactory until now since losses are irrelevant in engine performance.

The EGR valve has the highest pressure difference between the inlet and outlet when it is closed and the engine operates under full load. Although some EGR gas is lost in this case, the incoming airflow under full load is high and does not affect engine performance.

Notwithstanding the foregoing, the specifications to be complied with today derived from increasingly stricter standards have imposed several conditions making these EGR gas losses no longer acceptable.

The existence of catalytic converters causes part of the SO₂ to transform into SO₃, and when it comes into contact with water, SO₃ combines with water and gives rise to the presence of sulfuric acid. When condensation occurs, sulfuric acid reduces pH and causes corrosion to occur.

To prevent this undesired effect, the level of EGR gas losses when the valve is closed must be reduced.

The way to reduce losses in such valves under these conditions and with this use has never been considered in the state of the art, because up until now the losses obtained were considered low enough, and in the case of having to close a conduit with higher pressure differences, the approach was to change the valve type during the design stage.

Another alternative used in the state of the art for reducing losses in the closed position of a butterfly valve was by improving the support of the flap, using the lowest possible tolerances, based on the understanding that losses always occur in the contact between the flap and the inner wall of the conduit. Nevertheless, it has been proven that this strategy has a limit that cannot be reduced.

Likewise, an alternative configuration is known such as that described in the Japanese patent JP2013245625A, in which the interruption of the support between the flap and the inner wall of the conduit due to the presence of the shaft is avoided by means of an oblique flap configuration with respect to the shaft. This alternative configuration has the drawback of the existence of transitory positions between the two end positions, the open position and the closed position, producing mechanical interferences between the site of the closing support and the flap, which must be resolved with finishings having a complex configuration or even with movable supports.

The present invention modifies the design of a conventional butterfly valve such as that described in patent WO2008/144686A1, where the shaft is contained in the plane defined by the flap. The shaft allows said flap to rotate giving rise to its opening and closing.

### Brief Description of the Invention

The present invention overcomes the drawbacks mentioned above by modifying the configuration of a butterfly valve to reduce losses in its closed position. The use of less permeable poppet-type valves in low pressure EGR systems is therefore not necessary.

The modification of the valve, unlike how it has been done up until now in the state of the art, was carried out on the shaft securing the flap. Given that the improvement on the support of the flap on the inner wall of the conduit has been seen to have a limit, the paths of fluid passage to be established in order for losses to exist have been postulated by hypothesis, given that in practice it is either not possible to verify the actual paths that the fluid follows giving rise to losses, or the simulation techniques are not reliable due to the difficulty imposed by contour conditions defined primarily by walls which are in contact and which are also subject to friction and wear, giving rise to changes in their shape and positioning. This last assertion is based on the fact the contour conditions would be imposed on surfaces made up of the perimetral section and of the wall of the housing which is in contact with said perimetral section, among others.

Throughout the description, it will be understood that the conduit of the valve where the flap for opening and closing is housed defines a longitudinal direction. In turn, the shaft moving the flap is arranged transverse to this longitudinal direction. The longitudinal direction of the conduit or the axial direction of the shaft will be used interchangeably as a reference in the text, where appropriate, depending on the context, understanding that both are essentially perpendicular to one another.

According to one or more embodiments, the shaft will be arranged in a cantilevered manner such that the fixing to the body of the valve with rotation capability will be carried out through a single housing with the inlet located in the inner wall of the valve. According to other embodiments, the shaft will at least be supported at two points such that said shaft extends at least between two housings with an opening into the inner wall of the valve.

It has been considered by hypothesis that losses occur through the shaft, and that the leak flow follows a path having at least three components, an axial component according to the direction of the shaft for being introduced in the housing of said shaft, i.e., between the outer surface of the shaft and the wall of the housing which is in contact with said outer surface of the shaft; a perimetral component flowing to the other side of the main plane defined by the flap; and a third also axial component according to the direction of the shaft but in the opposite direction than that of said first component to again access the conduit but in the space downstream from the flap.

The invention proposes introducing particular means interrupting or at least constricting at least one of these paths, particularly the second path or component of the leak flow mainly running perimetrically around the shaft. The particular solution incorporates an interruption or constriction of the passage of the flow supposedly existing between the shaft and the wall of the housing of the shaft. The term constriction is specified because there are configuration examples in which the means established according to the invention interact with other components of the valve, resisting against the leak flow, with which components there may be small spaces necessary to assure the rotation of the shaft or an operation without mechanical interferences that give rise to excessive wear.

The valve according to the invention solves the technical problem by establishing a barrier or constriction for the second component of the leak flow by means of a particular configuration of the butterfly valve, such that the butterfly valve comprises:
- *a conduit for the passage of the flow to be regulated by the valve, a flap having a plate structure, and a shaft for actuating the flap for opening and closing the valve, where the shaft extends along an axis and where said conduit comprises a first housing for the shaft, the first housing having a wall.*

According to the preferred embodiments, the conduit for the passage of the flow is configured by means of a tubular cavity configured in the main body of the valve. The flap is the element which determines the passage of the flow either by allowing the flow when it has an orientation parallel to the main direction of the conduit, or by preventing the flow when it has an essentially transverse orientation. It is said to be essentially transverse because the orientation is inclined to favor wedging the edge of the flap against the inner wall of the conduit, such that a support coinciding with a reduced degree of leak is produced. The flap is integral with the shaft, and the rotation of the shaft establishes the movement of the flap, at least between two end positions, the open or semi-open position and the closed position.

The flap with a plate structure, said plate being made of sheet metal, for example, primarily extends in one plane. The midplane of the flap identified as the main plane of the flap will be a reference throughout the text. When the flap is in the closed position, the main plane will usually be oblique and not perpendicular to the longitudinal direction of the conduit.
- *The shaft comprises:*
   ∘ *a groove for housing the flap with a plate structure where both the flap and the axis of the shaft are contained in a main plane,*
   ∘ *fixing means for attaching the flap to the shaft,*
   ∘ *at least one perimetral section housed in the first housing of the shaft such that the wall of said housing is arranged against said perimetral section,*
   ∘ *a drive section adapted to be kinematically connected with an actuator for the movement of the shaft between at least two end positions, a closed position and a non-closed position,*
*where the flap is configured so that it closes the passage of the conduit when the shaft is in the closed position.*

The configuration of the shaft is designed for housing the flap with plate structure inside the groove such that the flap emerges from the groove on both sides. Plate is understood as a primarily two-dimensional structural element having a relatively small specific thickness when compared with the other two dimensions. A simple way to manufacture said flap with plate structure is by obtaining the same through stamping sheet metal with subsequent machining of the supports on the perimetral edge.

The sections of the flap emerging on both sides of the shaft extend according to a main plane with a shape coinciding with the intersection of the main plane of the flap with the wall of the conduit, taking into account the thickness of the plate, for closing the passage of the flow. According to embodiments, the edge of the plate is machined to give rise to a surface intended for being supported on the inner wall of the conduit with the highest level of agreement possible.

The drive section is a section of the shaft which is intended to be kinematically connected with an actuator which drives the rotation for opening and closing the flap. In embodiments, this section is knurled to facilitate gripping with a clamp attached to the last gear linking the shaft and the drive motor of the actuator.

Additionally, the shaft has what is called a perimetral section, where this section is a perimetral region axially coinciding (i.e. having the same axial position) with the wall of the housing of the shaft, such that this wall is a surface having a configuration that is antagonistic to the perimetral section of the shaft given that said wall is arranged against the outer surface of the shaft. The term "arranged against" indicates that said wall and said outer surface are close to one another such that there is established a clearance through which leak flow is produced, although contact between same is not ruled out.

The invention establishes the interruption or constriction of the leak flow between these two surfaces.

*The valve comprises two elastomeric sealing protuberances having a linear configuration and located adjacent to the groove housing the flap, with a position and orientation such that each protuberance is prolonged at least axially according to the longitudinal direction of the shaft, each protuberance coinciding with an intersection between the main plane of the flap in its closed position and the shaft along the perimetral section, and where said protuberances:*
∘ *either emerge from the surface of the perimetral section of the shaft, these protuberances being adapted to press against the wall of the first housing;*
∘ *or emerge from the wall of the first housing, these protuberances being adapted to press against the perimetral section of the shaft.*

According to the invention as described, the shaft has a groove housing the flap configured according to a plate which in turn defines the main plane. The main plane splits the shaft according to two axial lines, one on each side. The elastomeric protuberances having a linear configuration extend at least along both intersection lines. In the preferred examples, the perimetral section is adjacent to the groove so the elastomeric protuberances look like a prolongation of the side openings defining the groove housing the flap.

The invention takes two cases into account, one in which the elastomeric sealing protuberances are in the shaft, the case described below in the embodiments supported in the drawings, and a second case in which the elastomeric sealing protuberances are in the wall of the housing. In the first case, the elastomeric protuberances rotate with the shaft and always coincide with the intersections of the main plane of the flap and the shaft. The elastomeric protuberances are therefore located in positions that are diametrically opposite to one another. In the second case, the elastomeric protuberances are fixed and only coincide with the intersections between the main plane of the flap and the shaft when the flap is in the closed position. Nevertheless, when the flap is in the open position, there is no longer any problem with there being passages through which the fluid can leak out since the valve is not closed.

According to the first embodiments, the interruption or constriction of the second component of the leak flow is carried out by means of incorporating an elastomeric material on the surface of the shaft by means of a screen printing technique. Screen printing is understood as any technique whereby elastomer is deposited on a surface. For example, it is possible to deposit the elastomer with printing techniques using a head responsible for depositing the elastomer in layers in the specified area. Another deposition technique example is overmolding. In this technique, a mold with the embossment of the elastomer deposit is supported on the specified area. A cavity with the shape of the elastomer deposit is formed between the mold and the deposition surface. Once the mold is applied on the surface with the specified area, the elastomer is injected and caused to solidify. In all the examples, deposition by screen printing comprises at least one linear configuration for both protuberances by means of using screen printing, by means of elastomeric parts as described below, or by combining one technique with another, as established in the invention.

According to second embodiments, the interruption or constriction of the second component of the leak flow is carried out by means of incorporating an elastomeric part which is housed in a cavity arranged for this purpose. These second embodiments will be shown in greater detail in the detailed description of the invention. A portion of the surface of this part gives rise to contact through pressure on the opposite surface to form the mentioned interruption or constriction of the leak flow. Although both alternatives have been described for the sake of clarity, said alternatives are not exclusive since part of the interruption barrier or constriction of the leak flow can be configured by combining screen printing techniques in one portion and by using an elastomeric part in another portion. This is the case, for example, of the use of an elastomeric part arranged like a prolongation of the groove housing the flap and the incorporation of a perimetral ring adjacent to the part incorporated by screen printing.

It has been proven in experiments that the solution proposed under the hypotheses formulated above concerning leak flow in the shaft is surprisingly effective, internal leaks being reduced. This is because contrary to the technical preconception assuming that leaks occur mainly in the support between the flap and the inner wall of the valve, leaks through the shaft could be the main path for the fluid leak.

It has been estimated that between one third and one half of the leak flow occurs between the support and the inner wall of the conduit and that between one half and two thirds of the flow occurs through the shaft. The incorporation of the means for constricting or interrupting the leak flow through the shaft have been proven to be effective in experiments, the total flow being reduced by a percentage that could reach up to 50% of the total, leaks through the shaft thus being almost completely eliminated.

With this reduction of the leak flow, butterfly valves can still be used under more demanding conditions, such as those relating to corrosion described when formulating the technical problem to be solved, for example.

### Description of the Drawings

These and other features and advantages of the invention will be more clearly understood based on the following detailed description of a preferred embodiment, given solely by way of illustrative and non-limiting example, in reference to the attached drawings.
Figure 1 shows a first embodiment of the invention where an elevational view of the butterfly valve is shown and with the visual line parallel to the longitudinal axis of the conduit, which allows seeing the flap in the closed position.
Figure 2A-2B show an elevational section of the valve of the example of the preceding figure. Neither the shaft nor the flap is sectioned in either of the two figures. The section of Figure 2A is slightly turned with respect to the direction parallel to the axis of the conduit and shows the flap in the oblique position, and Figure 2B is perpendicular to the main plane of the flap showing in the section thereof the conduit in the oblique position.
Figure 3A shows a detail view of the shaft of the valve shown in the preceding figures with the flap and the bearings.
Figure 3B shows a cross-section perpendicular to the flap of the shaft of the preceding figure.
Figure 4 shows the same shaft of the preceding figure with the flap, the screws and the elastomeric parts as well as the bearings, among other elements, all according to an exploded perspective view. An enlarged view of one of the elastomeric parts is also shown.

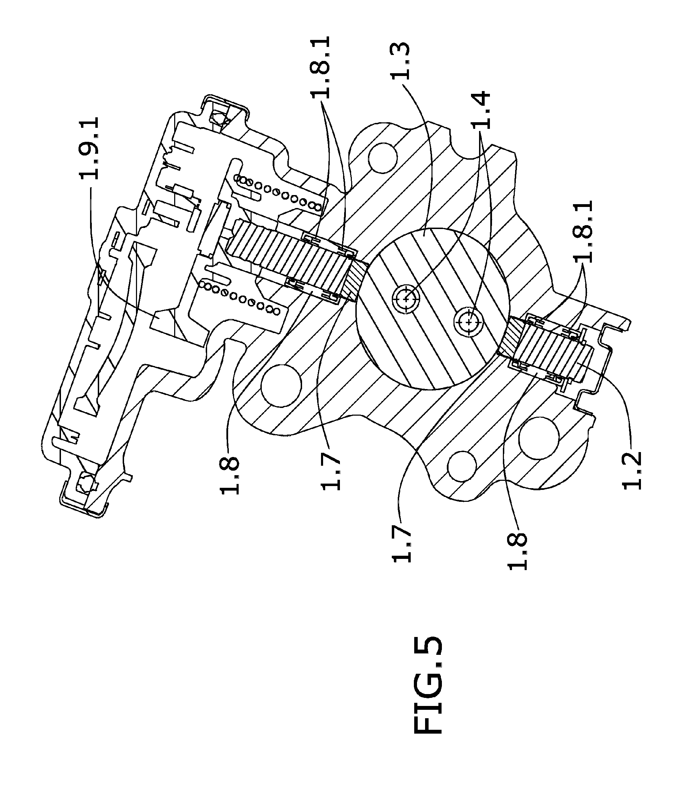

Figure 5 shows a section of the valve shown in the preceding figures, according to the midplane of the flap when it is in the closed position.
Figure 6 shows a section of the valve shown in the preceding figures, according to a plane perpendicular to the midplane of the flap when the flap is closed.
Figure 7 shows a detail of the part having an elastomeric body according to another embodiment, with a toroidal element, sectioned to facilitate the assembly.
Figure 8 shows an assembly sequence for assembling the elastomeric body on a shaft that has been modified to receive the toroidal element in a perimetral notch.

### Detailed Description of the Invention

According to the first inventive aspect, the present invention is a butterfly valve having a reduced leak flow.

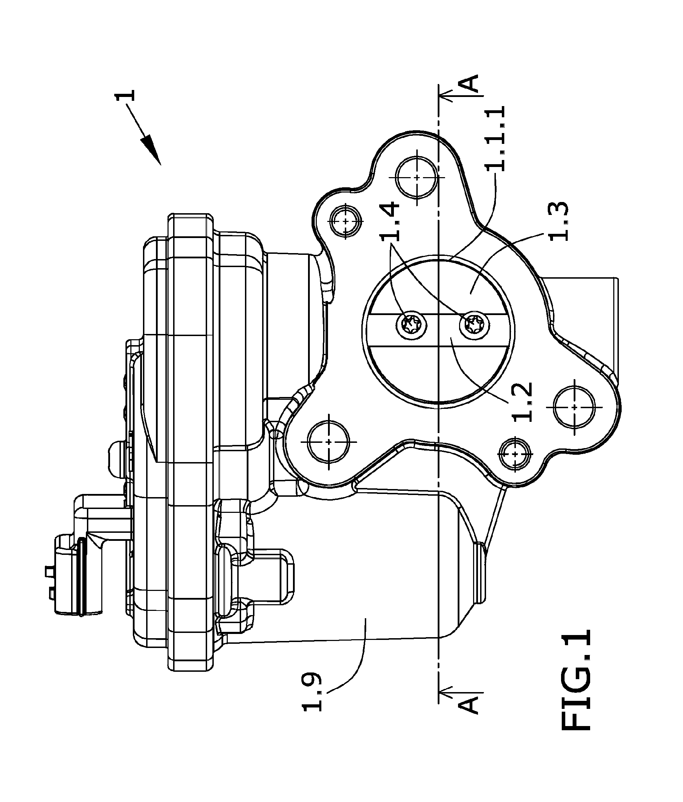

Figure 1 shows an elevational view of the valve (1) which allows seeing the inside of the conduit (1.1.1) constricting the valve (1). The conduit (1.1.1) is closed by means of a flap (1.3) integral to a shaft (1.2) transverse to the conduit (1.1.1). The shaft (1.2) in this embodiment is supported at two points, although other cantilever configurations are possible.

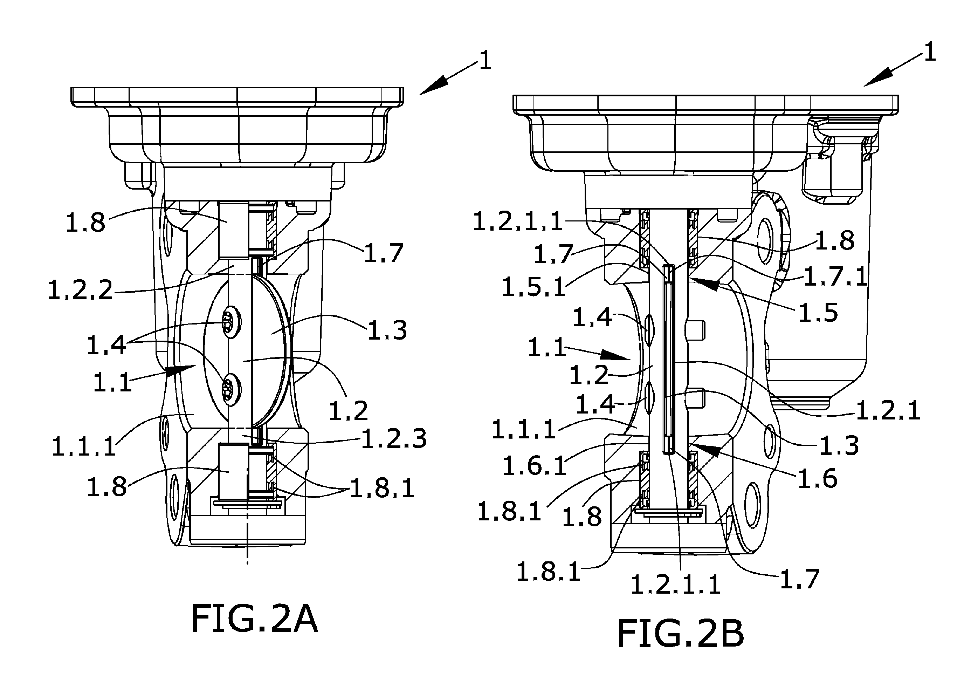

The shaft (1.2) has a planar groove (1.2.1) housing the flap (1.3) configured according to a planar sheet metal. The flap (1.3) is fixed by means of two screws (1.4) going through both the shaft (1.2) and the flap (1.3). Figure 2A shows the flap (1.3) in the oblique position, because it shows a section of the valve (1) according to an oblique plane slightly turned with respect to the direction parallel to the central axis of the conduit (1.1.1) regulated by the flap (1.3). The flap (1.3) has two end positions, an open position with the flap (1.3) parallel to the main axis of the conduit (1.1.1), and a second closed position with the oblique flap (1.3) being supported on the inner wall of the conduit (1.1.1). According to other embodiments, the conduit (1.1.1) has a support that is adapted so that the flap (1.3) is supported in the closed position. Both positions are reached by turning the shaft (1.2) and, with said shaft (1.2), the flap (1.3). The configuration of the flap (1.3) is mainly elliptical, coinciding with the intersection of the main plane of the plate of the flap (1.3) in the oblique orientation thereof corresponding to the closed position, with the cylindrical surface of the conduit.

In this embodiment, the edges of the flap (1.3) have been machined to form a support between parallel surfaces with a high level of agreement to reduce the leak flow passing through the closure between the flap (1.3) and the inner wall of the conduit (1.1.1).

In this embodiment, the shaft (1.2) is housed in two bearings (1.8), one at each end of the shaft (1.2). The bearings (1.8) internally have leak-tight O-ring seals (1.8.1) to prevent leaks, not in the conduit (1.1.1) but towards the outside of the valve (1).

Figure 2B is a section view that is slightly different from Figure 2A, where the plane of section is now perpendicular to the flap (1.3).

One of the ends of the shaft (1.2) enters through a first housing (1.5) inside the body of the valve (1), and the other end enters a second housing (1.6).

Both housings (1.5, 1.6) are formed by a wall according to a cylindrical surface (1.5.1, 1.6.1) surrounding a perimetral section (1.2.2, 1.2.3) of the shaft (1.2). There is tolerance between the cylindrical wall (1.5.1) and the perimetral section (1.2.2, 1.2.3) to allow the free rotation of the shaft (1.2).

Said Figure 2B shows the groove (1.2.1) prolonged at both ends until reaching a position with the end inside according to the axial direction of the shaft (1.2) until there is a distance which in this embodiment is about equal to the axial dimensions of the perimetral section (1.2.2, 1.2.3).

The prolonged groove (1.2.1) gives rise to a planar cavity parallel to the flap (1.3), located such that it axially coincides with the perimetral section (1.2.2, 1.2.3) referred to as sealing housing (1.2.1.1).

On both sides of the shaft (1.2), in the cavity formed as the sealing housing (1.2.1.1) and generated by the prolongation of the groove (1.2.1), there is housed a part formed by a planar elastomeric body (1.7) which is prolonged transversely to both sides of the shaft (1.2) beyond the cylindrical surface defined in the perimetral section (1.2.2, 1.2.3). The result of the prolongation of the planar elastomeric body (1.7) is an elastomeric protuberance (1.7.1) having a linear configuration that is supported with a certain amount of force against the inner wall (1.5.1, 1.6.1) of the housing (1.5, 1.6).

The protuberance (1.7.1) having a linear configuration follows the path seen in Figure 2B, vertically positioned according to the orientation of the figure as it is shown; coinciding with the axial direction of the shaft (1.2). The protuberance (1.7.1) arranged in the axial direction forms a constriction for the perimetral leak flow, the flow according to the second component, or a barrier if it blocks this entire leak flow.

The protuberance thus configured allows the flow to enter according to the axial direction between the surface of the perimetral section (1.2.2, 1.2.3) of the shaft (1.2) and the wall of the housing (1.5.1, 1.6.1), but it does not allow said flow to flow perimetrically to go from one side of the plane defined by the flap to the other. Accordingly, it has been experimentally proven that closing the flap (1.3) gives rise to smaller leak flow rates compared to those of a butterfly valve without the solution proposed by the present invention.

According to other embodiments, the protuberance (1.7.1) is obtained by depositing an elastomer on the surface of the shaft (1.2) by means of screen printing according to an axially extending line resulting in the same appearance as that which is seen in Figure 2B, except without the prolongation (1.2.1.1) of the groove (1.2.1).

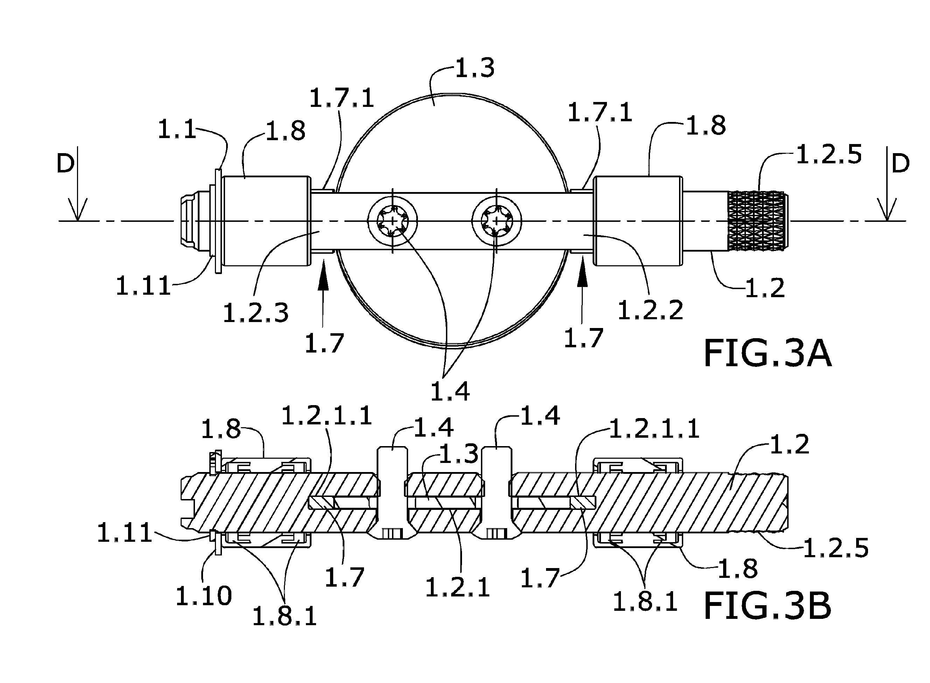

Figure 3B shows a section of the shaft (1.2) according to a plane perpendicular to the flap (1.3), as shown in Figure 3A. The plane sections both the flap (1.3) and the elastomeric body (1.7). The bearings (1.8) allowing rotation of the shaft (1.2) are shown close to the ends of said shaft (1.2). At the left end, according to the orientation shown in Figure 3B, there is a circlip (1.11) retaining a washer (1.10) preventing the movement of the shaft (1.2) in the axial direction.

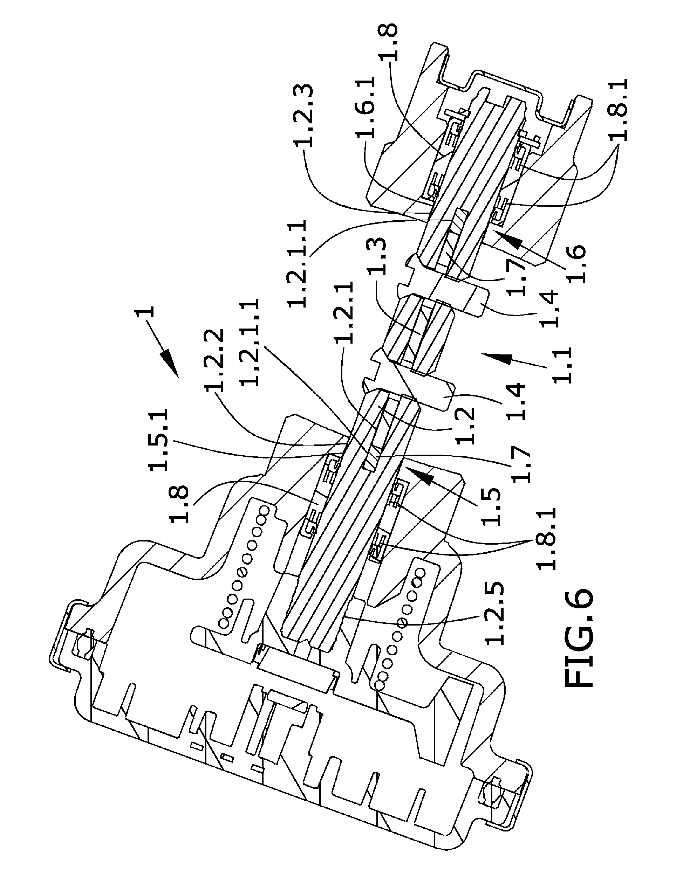

At the opposite end of the shaft (1.2) there is shown a knurling in a drive section (1.5) facilitating the attachment with a gear (1.9.1) without causing the relative rotation when the drive motor of the drive means (1.9) act, which gear (1.9.1) is shown in the section view of Figure 6.

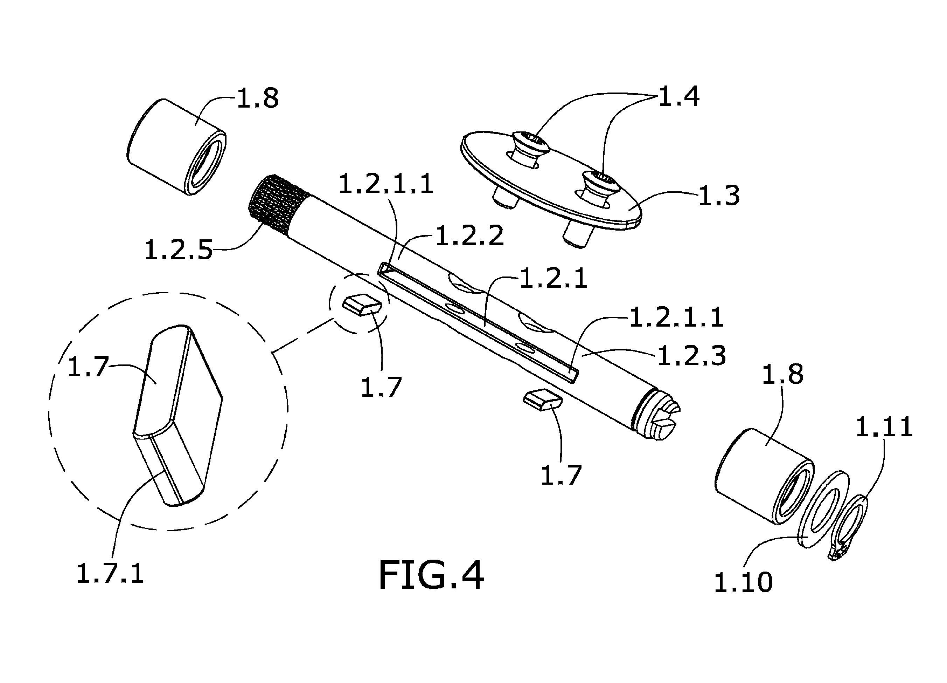

The same configuration is shown in a perspective view in Figure 4, where the part formed by the elastomeric body (1.7), with respective protuberances (1.7.1) located in opposition on both sides of the elastomeric body (1.7), is shown.

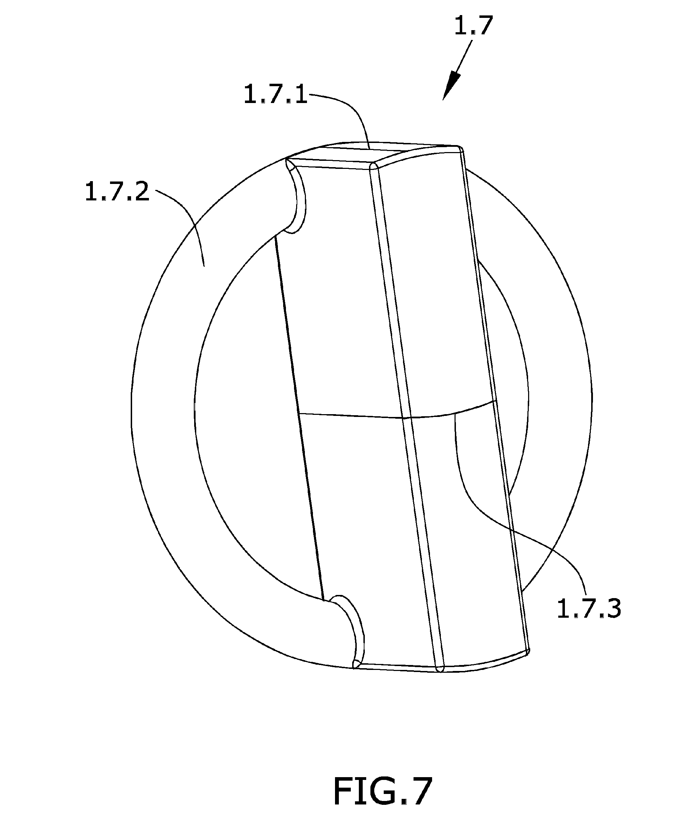

Figure 7 shows another embodiment where the elastomeric body (1.7) comprises a toroidal body (1.7.2) connected through the edges (1.7.1) of said elastomeric body (1.7) and adapted to perimetrically surround the shaft (1.2) contacting with the wall (1.5.1, 1.6.1) of the housing (1.5, 1.6) of the shaft (1.2).

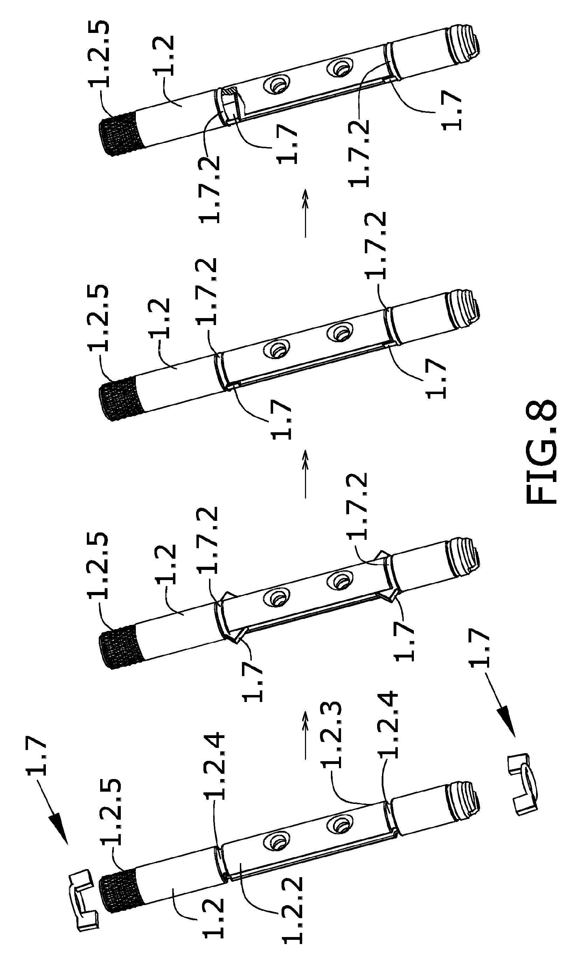

As shown in the sequence of Figure 8, the shaft (1.2) has a perimetral notch (1.2.4) that allows housing the toroidal body (1.7.2).

In order to be able to insert the elastomeric body (1.7) with the toroidal body (1.7.2), the main planar body of the elastomeric body (1.7) is transversely sectioned (1.7.3), leaving one protuberance (1.7.1) on one side and the other protuberance (1.7.1) on the other.

Given that the elastomeric body (1.7) is elastically deformable, the section (1.7.3) allows the two halves of the main body to be separated as shown in Figure 8. The deformed configuration is that of a toroid that has two diametrically opposed half elastomeric bodies.

The toroidal body (1.7.2) can be inserted in the shaft (1.2) by moving the part formed by the elastomeric body (1.7) in the axial direction until the toroidal body (1.7.2) is housed in the perimetral notch (1.2.4). Once housed in the perimetral notch (1.2.4), the two half portions elastically recover their natural shape, entering the prolongation of the groove (1.2.1), the inside of the sealing housing (1.2.1.1), and leaving the surfaces coinciding with the section (1.7.3) facing one another.

The toroidal body (1.7.2) sets up a barrier or constriction against the leak flow having an axial component, improving the sealing formed by the protuberance (1.7.1). The attachment between the main body of the elastomeric body (1.7) and the toroidal body (1.7.2) prevents there being a leak in this end area.

It is possible to combine an elastomeric body (1.7) formed by a part such as that shown in Figure 4 with protuberances obtained by screen printing. This is the case of adding a perimetral element by screen printing, resulting in two parallel and diametrically opposed longitudinal protuberances arranged in the shaft, as a result of the part formed by the elastomeric body (1.7), and the perimetral protuberance obtained by screen printing. Another embodiment of interest comprises two parallel and diametrically opposed longitudinal protuberances arranged in the shaft obtained by screen printing, and a part formed by a ring, for example a toroidal ring, made of an elastomeric material that is located in contact with or attached to the ends of the longitudinal protuberances. The combination of ways of obtaining the elastomeric protuberance (1.7.1) by means of screen printing and elastomeric parts allows improvements in certain areas that can give rise to leaks.

In any of the embodiments, the space between the wall (1.5.1, 1.6.1) of the housing (1.5, 1.6) arranged against the perimetral section (1.2.2, 1.2.3) and the bearing (1.8) is sealed with grease.

## Claims

1. A butterfly valve (1) comprising: a conduit (1.1) for the passage of the flow to be regulated by the valve (1), a flap (1.3) with a plate structure, and a shaft (1.2) for actuating the flap (1.3) for opening and closing the valve (1), the shaft (1.2) extending along an axis,
- where said conduit (1.1) comprises a first housing (1.5) for the shaft (1.2), the first housing (1.5) having a wall (1.5.1),
- where the shaft (1.2) comprises:
o a groove (1.2.1) for housing the flap (1.3), where both the flap (1.3) and the axis of the shaft (1.2) are contained in a main plane,
o fixing means (1.4) for attaching the flap (1.3) to the shaft (1.2),
o at least one perimetral section (1.2.2) housed in the first housing (1.5) of the shaft (1.2) such that the wall (1.5.1) of said housing (1.5) is arranged against said perimetral section (1.2.2),
o a drive section (1.2.5) adapted to be kinematically connected with an actuator (1.9) for the movement of the shaft (1.2) between at least two end positions, a closed position and a non-closed position,
- where the flap (1.3) is configured so that it closes the passage of the conduit (1.1) when the shaft (1.2) is in the closed position;
the valve (1) being **characterized in that** it comprises two elastomeric sealing protuberances (1.7.1) having a linear configuration and located adjacent to the groove (1.2.1) housing the flap (1.3), with a position and orientation such that each protuberance (1.7.1) is prolonged at least axially according to the longitudinal direction of the shaft (1.2), each protuberance coinciding with an intersection between the main plane of the flap (1.3) in the closed position and the shaft (1.2) along the perimetral section (1.2.2), and where said protuberances (1.7.1):
o either emerge from the surface of the perimetral section (1.2.2) of the shaft (1.2), these protuberances (1.7.1) being adapted to press against the wall (1.5.1) of the first housing (1.5);
∘ or emerge from the wall (1.5.1) of the first housing (1.5), these protuberances (1.7.1) being adapted to press against the perimetral section (1.2.2) of the shaft (1.2).

2. The valve (1) according to claim 1, where said valve comprises a second housing (1.6) of the shaft (1.2) located on the opposite side of the conduit (1.1), according to the axial direction of the shaft (1.2), in which the first housing (1.5) is located, where the shaft (1.2) extends at least between the first housing (1.5) and the second housing (1.6), and where the second housing (1.6) comprises a wall (1.6.1).

3. The valve (1) according to claim 2, where the shaft (1.2) comprises a second perimetral section (1.2.3) housed in the second housing (1.6) such that the wall (1.6.1) of the second housing (1.6) is arranged against said second perimetral section (1.2.3) and where the valve (1) comprises two other elastomeric sealing protuberances (1.7.1) having a linear configuration and located adjacent to the groove (1.2.1) for housing the flap (1.3), with a position and orientation such that each protuberance (1.7.1) is prolonged at least axially according to the longitudinal direction of the shaft (1.2), each protuberance coinciding with an intersection between the main plane of the flap (1.3) in the closed position and the shaft (1.2) along the second perimetral section (1.2.3), and where said protuberances (1.7.1):
o either emerge from the surface of the second perimetral section (1.2.3) of the shaft (1.2), these protuberances (1.7.1) being adapted to press against the wall (1.6.1) of the second housing (1.6);
∘ or emerge from the wall (1.6.1) of the second housing (1.6), these protuberances (1.7.1) being adapted to press against the second perimetral section (1.2.3) of the shaft (1.2).

4. The valve (1) according to any of claims 1 to 3, where the elastomeric sealing protuberance comprises a deposition of elastomeric material for sealing incorporated by means of screen printing.

5. The valve (1) according to any of claims 1 to 4, where the groove (1.2.1) for housing the flap (1.3) is prolonged by means of two open channels at least on one of the sides of the shaft (1.2) and axially, according to the longitudinal direction of the shaft (1.2) coinciding with both intersections of the main plane of the flap (1.3) and the shaft (1.2) along the perimetral section (1.2.2, 1.2.3), respectively, where the elastomeric sealing protuberance is configured as an elastomeric part housed in each open channel, said elastomeric part comprising a pressure edge (1.7.1) adapted to contact with the wall (1.5.1, 1.6.1) of the housing (1.5, 1.6).

6. The valve according to any of claims 1 to 4, where the groove (1.2.1) for housing the flap (1.3) is prolonged axially at least on one of the sides of the shaft (1.2), according to the longitudinal direction of the shaft (1.2) coinciding with the intersection of the main plane of the flap (1.3) and the shaft (1.2) along the perimetral section (1.2.2, 1.2.3), according to an essentially planar cavity giving rise to a sealing housing (1.2.1.1), the main plane of this cavity being contained in the main plane of the flap (1.3), going through the shaft (1.2) from one side to the other and where the elastomeric sealing protuberance is configured as an elastomeric body (1.7) housed in said cavity, the elastomeric body (1.7) extending in the axial direction of the shaft (1.2) between the flap (1.3) and the end of the groove (1.2.1) and in the direction transverse to the shaft (1.2), such that it comprises on both sides a pressure edge (1.7.1) adapted to contact with the wall (1.5.1, 1.6.1) of the housing (1.5, 1.6).

7. The valve according to any of the preceding claims, where the perimetral section (1.2.2, 1.2.3) is a cylindrical section.

8. The valve (1) according to any of the preceding claims, where the shaft (1.2) is housed in a bearing (1.8) in one or in both housings (1.5, 1.6).

9. The valve (1) according to claim 8 and any of claims 1 to 7, where the perimetral section (1.2.2, 1.2.3) is in contact with the wall (1.5.1, 1.6.1) of one of the housings (1.5, 1.6) of the shaft (1.2) and is located according to the axial direction of the shaft (1.2) between the conduit (1.1) and the bearing (1.8).

10. The valve (1) according to any of the preceding claims, where the elastomeric body (1.7) comprises a toroidal body (1.7.2) connected through the edges (1.7.1) adapted to perimetrically surround the shaft (1.2) contacting with the wall (1.5.1, 1.6.1) of the housing (1.5, 1.6) of the shaft (1.2).

11. The valve (1) according to claims 10 and 6, where the elastomeric body (1.7) housed inside the sealing housing (1.2.1.1) is sectioned (1.7.3) to facilitate the assembly.

12. The valve (1) according to claim 10 or 11, where the shaft (1.2) comprises a perimetral notch (1.2.4) for supporting the toroidal body (1.7.2).

13. The valve (1) according to any of the preceding claims, where the space between the wall (1.5.1, 1.6.1) of the housing (1.5, 1.6) arranged against the perimetral section (1.2.2, 1.2.3) and the bearing (1.8) is sealed and lubricated with grease.

14. An EGR system comprising an EGR valve according to any of the preceding claims.
